# FASCICULE DE BREVET EUROPEEN

(11) **EP 3 974 296 B1**
(45) Date de publication et mention de la délivrance du brevet: **08.05.2024**
(21) Numéro de dépôt: 21196377.2
(22) Date de dépôt: 13.09.2021
(51) Int. Cl.: B62D 51/06, A46D 1/00, A47L 11/40, B62D 51/00, E01H 1/05, A01M 21/02, A46B 3/00, A47L 11/282

(54) **EQUIPEMENT A CONDUCTEUR MARCHANT A GEOMETRIE VARIABLE**
HANDGEFÜHRTES GERÄT MIT EINER VARIABLEN GEOMETRIE
WALK-BEHIND DEVICE WITH VARIABLE GEOMETRY

(30) Priorité: 24.09.2020 FR 2009694
(43) Date de publication de la demande: 30.03.2022
(73) Titulaire: Pubert Henri SAS, 85110 Chantonnay (FR)
(72) Inventeur: VION, Peter, 85700 POUZAUGES (FR); LECOINTE, Nicolas, 44400 REZÉ (FR); GERBAUD, Nicolas, 85110 MONSIREIGNE (FR)
(74) Mandataire: Vidon Brevets & Stratégie

(56) Documents cités:
- EP-A1- 2 851 276
- CN-A- 110 258 407
- DE-A1- 10 139 989
- DE-A1- 10 246 999

## Description

### Domaine technique

Le domaine de l'invention est celui du nettoyage des sols et du désherbage.

Notamment, l'invention concerne les équipements à conducteur marchant, équipés de brosses rotatives, comme les équipements à conducteur marchant de type machine de désherbage mécanique.

Plus particulièrement, l'invention concerne les équipements à conducteur marchant comprenant un système à brosse rotative pour le désherbage ou le balayage des sols.

Une telle invention trouve son utilité notamment pour le nettoyage ou le désherbage de sols tels que des trottoirs, des routes, ou des intérieurs de bâtiments agricoles comme des étables ou autres bâtiments d'élevage.

### Art antérieur

Les équipements à conducteur marchant comprenant un système à brosse rotative pour le désherbage ou le balayage sont commercialisés depuis de nombreuses années, décrits par exemple dans les documents DE 101 39 989 A1, DE 102 46 999 A1, EP 2 851 276 A1 et CN 110 258 407 A.

De tels équipements comportent, de manière classique un châssis ménagé le long d'un axe longitudinal médian et supportant un bloc moteur muni d'une boîte de transmission, des roues de transport, et un ou plusieurs outils de travail, tel qu'une brosse, montée en rotation sous le châssis autour d'un arbre transversal ou vertical. De tels équipements comprennent en outre deux roues portées par un essieu et supportant un châssis, une boîte de transmission, et un moteur entraînant en rotation une brosse rotative, cette brosse rotative étant portée par le châssis de sorte à pouvoir entrer en contact avec le sol, et une barre de guidage de l'équipement.

Actuellement, sur de tels équipements, il est possible de régler l'orientation de la brosse rotative située à l'avant de la machine. Cette orientation peut se faire par décalage vers la droite ou la gauche de l'axe de la brosse rotative par rapport à l'axe médian des roues qui peut être mis en oeuvre de plusieurs façons :
- par déport articulé d'une partie du châssis de l'équipement ;
- par rotation selon un axe vertical du châssis de l'équipement par rapport au plan médian des roues.

Sur de tels équipements, il est également possible de régler l'orientation angulaire de cette brosse rotative par rapport au plan du sol de l'outil. Ce réglage peut se faire notamment :
- par pivot selon un axe radial d'un plateau de support de la brosse rotative par rapport au châssis de l'équipement ;
- par relevage de l'une ou l'autre des deux roues de l'équipement pour incliner l'ensemble de la machine.

Un inconvénient des équipements actuels est que le réglage de ces deux mouvements d'orientation de la brosse rotative est dissocié. En d'autres termes, ces deux réglages ne se font pas simultanément, et nécessitent chacun des composants mécaniques pour être mis en oeuvre, ce qui augmente le nombre final de pièces mises en oeuvre et la complexité du système mécanique. L'approche actuelle augmente incidemment les risques de panne et les opérations de maintenance ainsi que les coûts liés ce qui n'est pas satisfaisant.

En outre, cette dissociation des deux mouvements augmente le temps nécessaire pour bien positionner la brosse rotative ce qui n'est pas non plus satisfaisant.

Par ailleurs, un autre aspect concernant les équipements à conducteur marchant équipés de brosse rotative est la nécessité, de sorte à effectuer un travail satisfaisant quelles que soient les conditions, de présenter des moyens d'inversion du sens de rotation de cette brosse rotative, que ce soit pour effectuer une marche arrière ou inverser directement la rotation, par exemple pour un deuxième passage sur une surface.

Actuellement, l'inversion du sens de rotation de ces brosses rotatives fonctionne selon trois technologies principales. Pour les systèmes à entrainement hydraulique, le système fonctionne par actionnement d'un inverseur interne de la rotation dans le moteur hydraulique mais ce type de système est très onéreux et présente un risque de pollution des sols élevé dès la moindre fuite. D'autres systèmes à fonctionnement par courroie nécessitent des réglages précis et une maintenance régulière pour compenser l'usure ou l'allongement des composants. Pour des systèmes d'inversion constitués uniquement de pignons, le système présente une pluralité de pignons ménagés sur plusieurs plans. En sens normal de rotation, l'arbre d'entrée est en prise directe avec l'arbre de sortie. Le pignon d'arbre d'entrée entraine alors dans le même sens que lui l'arbre de sortie.

En inversant le sens de rotation, le pignon d'arbre d'entrée entraine un pignon fou qui entraine lui-même un arbre intermédiaire. L'arbre intermédiaire entraine alors l'arbre de sortie. Dans cette configuration, l'arbre de sortie tourne alors dans le sens inverse de celui de l'arbre d'entrée.

Le changement de sens de rotation de l'arbre de sortie se fait généralement par un mouvement de translation du pignon d'arbre d'entrée d'une première position (en prise directe avec l'arbre de sortie) à une deuxième position (en entrainant un pignon fou). Selon cette technologie, les différents pignons sont ménagés sur plusieurs plans ce qui présente un inconvénient, notamment du point de vue de l'encombrement ce qui n'est pas satisfaisant.

En outre, le nombre important de pièces mises en oeuvre augmente incidemment le risque de maintenance ainsi que le coût ce qui n'est pas non plus satisfaisant.

Il existe une autre technologie alliant un système de pignons avec une chaîne. Selon un tel système, en sens normal, l'arbre d'entrée est en prise directe avec l'arbre de sortie. Le pignon d'arbre d'entrée entraine dans le même sens que lui l'arbre de sortie.

Dans un sens inversé, le pignon de l'arbre d'entrée entraine le pignon d'arbre intermédiaire qui va tourner dans le sens inverse. L'entrainement entre l'arbre intermédiaire et l'arbre de sortie est réalisé par une chaîne, ce qui n'inverse par le sens de rotation. L'arbre de sortie tourne donc dans le sens inverse de l'arbre d'entrée.

Le changement de sens de rotation de l'arbre de sortie se fait également généralement par un mouvement de translation du pignon d'arbre d'entrée d'une première position (en prise directe avec l'arbre de sortie) à une deuxième position (entrainant un pignon d'arbre intermédiaire).

Selon cette solution, les différents pignons et la chaîne sont également ménagés sur plusieurs plans ce qui présente un inconvénient, notamment du point de vue de l'encombrement ce qui n'est pas satisfaisant.

En outre, le nombre important de pièces mises en oeuvre, ainsi que la fragilité due à la chaîne, augmente incidemment le temps de maintenance ainsi que les coûts de fabrication ce qui n'est pas non plus satisfaisant.

Par ailleurs, un autre aspect concernant les équipements lorsqu'ils sont utilisés pour le désherbage est la nécessité, de sorte à effectuer un travail satisfaisant et non destructif pour le sol, d'avoir un matériau de brosse qui soit suffisamment raide pour désherber la surface voulue mais qui reste suffisamment souple pour éviter de détériorer la matière du sol, que celle-ci soit en pavé ou en enrobé présentant des fissures.

Actuellement, les brosses des équipements de désherbage mécanique sont composées de fils métalliques tressés, de fil métallique plat ou de fils en matière plastique qui sont maintenu ensemble dans une bague grâce à un sertissage.

Ces types de torons présentent les inconvénients soit de diminuer leur efficacité de désherbage en limitant la détérioration du sol, soit de détériorer fortement le matériau du sol mais en garantissant un désherbage efficace.

Ainsi, il existe un besoin d'amélioration de ces équipements à conducteur marchant.

L'invention a notamment pour objectif de pallier au moins certains de ces inconvénients de l'art antérieur.

### Exposé de l'invention

L'invention répond à ce besoin en proposant un équipement selon l'objet de la revendication indépendante 1, définissant en soi l'invention. Des modes de réalisation préférés sont décrits dans les revendications dépendantes.

Ainsi, l'invention propose une approche nouvelle et inventive permettant de résoudre au moins en partie certains des inconvénients de l'art antérieur.

Notamment, l'invention permet de fournir un équipement à conducteur marchant à géométrie variable dont la compacité est augmentée et les coûts sont réduits du fait que la mise en mouvement de la brosse nécessite un nombre moindre de composants mécaniques. En effet, le châssis étant monté mobile par rapport à l'axe de roues et par rapport à l'axe de pivotement, le réglage de la brosse selon les deux axes est fait simultanément.

En outre, cela permet d'optimiser le temps nécessaire pour bien positionner la brosse rotative en regard du sol, de la zone de travail ou d'obstacles.

Selon un aspect d'au moins un mode de réalisation de l'invention, ledit châssis est mobile entre au moins :
- une position initiale axée sur ledit plan médian, dans laquelle il est maintenu fixe par rapport audit axe de pivotement et
- une position désaxée dans laquelle ledit châssis peut pivoter au moins autour de l'axe de roues et autour de l'axe de pivotement.

En outre, l'équipement à conducteur marchant à géométrie variable comprend des moyens de déverrouillage de la position dudit châssis.

En d'autres termes, dans la position initiale axée sur le plan médian, le châssis peut pivoter autour de l'axe de roues mais est maintenu fixe par rapport à l'axe de pivotement.

Selon un aspect d'au moins un mode de réalisation de l'invention, lesdits moyens de déverrouillage se présentent sous la forme d'un premier levier de commande disposé au niveau d'une première poignée de la barre de guidage dudit équipement.

De ce fait, cela permet que les moyens de déverrouillage soient facilement accessibles pour un utilisateur de l'équipement.

Selon un aspect d'au moins un mode de réalisation de l'invention, ledit châssis est apte à pivoter par rapport à sa position initiale verrouillée autour de l'axe selon un angle compris entre - 30 degrés et 30 degrés.

Ainsi, le châssis présente une grande mobilité permettant d'atteindre des points de nettoyages qui pourraient sinon s'avérer difficiles à nettoyer.

Selon un aspect d'au moins un mode de réalisation de l'invention, lorsque ledit châssis forme un angle compris entre -30 degrés et 0 degrés par rapport à sa position initiale verrouillée, ladite brosse rotative s'incline par rapport au sol dans un sens antihoraire.

En d'autres termes, le pivotement dudit châssis selon un angle compris entre -30 degrés et 0 degrés par rapport à sa position initiale verrouillée entraine une inclinaison de la brosse rotative par rapport au sol dans un sens antihoraire.

Selon un aspect d'au moins un mode de réalisation de l'invention, lorsque ledit châssis forme un angle compris entre 0 degrés et 30 degrés par rapport à sa position initiale verrouillée, ladite brosse rotative s'incline par rapport au sol dans un sens horaire.

En d'autres termes, le pivotement dudit châssis selon un angle compris entre 0 degrés et 30 degrés par rapport à sa position initiale verrouillée entraine une inclinaison de la brosse rotative par rapport au sol dans un sens horaire.

Selon un aspect d'au moins un mode de réalisation de l'invention, ladite boite de vitesse présente :
- un pignon d'entrée relié à l'arbre menant du moteur ;
- un pignon de sortie relié à un arbre de sortie entrainant en rotation la brosse rotative, et
- un train de pignons intermédiaires comprenant un premier pignon intermédiaire et un deuxième pignon intermédiaires, ledit premier pignon intermédiaire étant lié avec ledit pignon d'entrée,
ledit train de pignons intermédiaires étant mobile entre au moins :
- une position de fonctionnement normal dans laquelle ledit deuxième pignon intermédiaire est uniquement au contact dudit premier pignon intermédiaire, le pignon de sortie étant en contact avec ledit premier pignon intermédiaire et tournant dans le même sens que le pignon d'entrée, et
- une position d'inversion dans laquelle le premier pignon intermédiaire est à distance dudit pignon de sortie, ledit deuxième pignon intermédiaire est au contact desdits premier pignon intermédiaire et pignon de sortie, ledit pignon de sortie tournant dans le sens inverse du pignon d'entrée.

Ainsi, cela permet d'avoir une solution d'inversion du sens de rotation de la brosse qui présente un encombrement qui est relativement optimisé du fait que les différents pignons sont ménagés sur un plan unique. En outre, les différents composants mis en oeuvre sont relativement simples et robustes ce qui permet de diminuer incidemment le risque de maintenance ainsi que le coût d'une telle maintenance éventuelle.

Selon un aspect d'au moins un mode de réalisation de l'invention, le passage de ladite position de fonctionnement normal à ladite position d'inversion se fait par pivotement dudit train de pignons intermédiaires autour d'un axe de rotation dudit pignon d'entrée.

De ce fait, cela permet de mettre en oeuvre un tel système d'inversion du sens de rotation de la brosse par le biais de moyens mécaniques simples et peu coûteux.

Selon un aspect d'au moins un mode de réalisation de l'invention, lesdits premier et deuxième pignons intermédiaires sont ménagés sur une platine de support montée pivotante autour dudit axe de rotation dudit pignon d'entrée.

Ainsi, le système mis en oeuvre assurer une fiabilité optimisée du fait que les composants mis en oeuvre sont simples et peu nombreux, de sorte à minimiser les risques de maintenance et de coût dû à la complexité.

Selon un aspect d'au moins un mode de réalisation de l'invention, ladite platine de support est manoeuvrable par le biais d'un deuxième levier de commande disposé au niveau de la barre de guidage dudit équipement de sorte à faire passer ledit train de pignons intermédiaires de ladite position de fonctionnement normal à ladite position d'inversion, ladite platine de support étant reliée audit deuxième levier de commande au moyen d'un câble de commande relié à un premier moyen d'accroche de ladite platine de support.

De ce fait, cela permet que les moyens d'inversion du sens de rotation soient facilement accessibles pour un utilisateur de l'équipement.

Selon une caractéristique d'au moins un mode de réalisation de l'invention, la platine de support présente un ressort de rappel du train de pignons intermédiaires en position de fonctionnement normal.

Selon un aspect d'au moins un mode de réalisation de l'invention, ladite platine de support présente un deuxième moyen d'accroche pour un deuxième câble de commande fonctionnant en opposition au premier câble de commande et permettant de verrouiller l'une ou l'autre des positions du train de pignons intermédiaires.

Selon un aspect d'au moins un mode de réalisation de l'invention, la brosse rotative comprend un plateau principal présentant une forme sensiblement circulaire, et une pluralité de torons répartis dans une pluralité de logements ménagés sur le pourtour du plateau principal, chacun des torons comprenant un manchon et une pluralité de fils maintenus dans le manchon par sertissage.

Selon un aspect d'au moins un mode de réalisation de l'invention, pour chacun des torons, ladite pluralité de fils comprend un premier groupe de fils en métal et un deuxième groupe de fils en plastique.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] est une vue en perspective d'un équipement à conducteur marchant à géométrie variable selon un mode de réalisation de l'invention vu depuis l'arrière ;
[Fig 2] est une vue en perspective d'un équipement à conducteur marchant à géométrie variable selon un mode de réalisation de l'invention vu depuis l'avant ;
[Fig 3] est une vue en perspective de l'équipement de la figure 2, représentant le plan médian M ;
[Fig 4] est une vue en perspective d'un équipement à conducteur marchant à géométrie variable selon un mode de réalisation de l'invention vu de dessous ;
[Fig 5] est une vue de côté en coupe d'un équipement à conducteur marchant à géométrie variable selon un mode de réalisation de l'invention, montrant l'axe de rotation Z du châssis par rapport aux roues ;
[Fig 6] est une vue en perspective arrière d'un équipement à conducteur marchant à géométrie variable selon un mode de réalisation de l'invention, montrant l'axe de rotation Z du châssis par rapport aux roues ;
[Fig 7] est une vue de dessus d'un équipement à conducteur marchant à géométrie variable selon un mode de réalisation de l'invention, le châssis étant en position initiale axée ;
[Fig 8] est une vue de devant de l'équipement à conducteur marchant à géométrie variable de la figure 6 ;
[Fig 9] est une vue de dessus d'un équipement à conducteur marchant à géométrie variable selon un mode de réalisation de l'invention, le châssis étant en position désaxée, pivotée vers la droite de l'équipement ;
[Fig 10] est une vue de devant de l'équipement à conducteur marchant à géométrie variable de la figure 9 ;
[Fig 11] est une vue de dessus d'un équipement à conducteur marchant à géométrie variable selon un mode de réalisation de l'invention, le châssis étant en position désaxée, pivotée vers la gauche de l'équipement ;
[Fig 12] est une vue de devant de l'équipement à conducteur marchant à géométrie variable de la figure 11 ;
[Fig 13] est une vue schématique représentant les différents axes de l'équipement ainsi que les différentes positions extrêmes du châssis lors de son déplacement autour de l'axe Z de pivotement ;
[Fig 14] est une vue en perspective d'une boite de vitesse d'un équipement à conducteur marchant à géométrie variable selon un mode de réalisation de l'invention, le train de pignons intermédiaires étant dans une position de fonctionnement normal ;
[Fig 15] est une vue de dessus de la boîte de vitesses de la figure 13, train de pignons intermédiaires étant dans une position de fonctionnement normal ;
[Fig 16] est une vue en perspective d'une boite de vitesse d'un équipement à conducteur marchant à géométrie variable selon un mode de réalisation de l'invention, le train de pignons intermédiaires étant dans une position d'inversion ;
[Fig 17] est une vue de dessus de la boîte de vitesses de la figure 13, le train de pignons intermédiaires étant dans une position d'inversion ;
[Fig 18] est une vue en perspective de la brosse et des torons de désherbage selon un mode de réalisation de l'invention ;
[Fig 19] est une vue de face d'un toron selon un premier mode de réalisation ;
[Fig 20] est une vue de face d'un toron selon un deuxième mode de réalisation, et
[Fig 21] est une vue de face d'un toron selon un troisième mode de réalisation.

### Description détaillée de modes de réalisation de l'invention

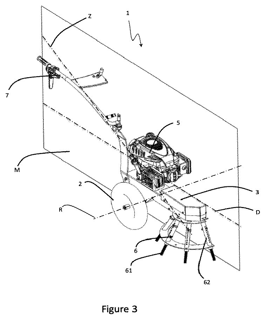

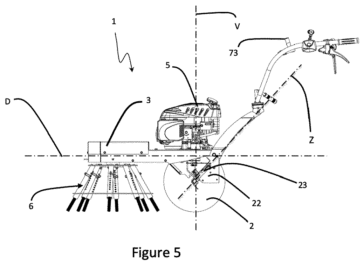

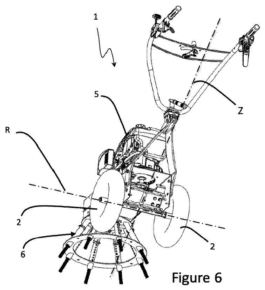

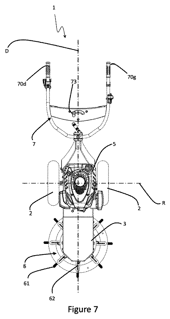

Le principe général de l'invention repose sur la mise en oeuvre d'un équipement à conducteur marchant à géométrie variable, avant ou reculant selon une direction D, dont le châssis, qui porte une brosse rotative, est monté pivotant autour d'un axe Z de pivotement (illustré notamment en figures 5 et 6) positionné sur le plan médian M des roues (illustré notamment en figure 3) et qui est non perpendiculaire au sol, et est monté également pivotant sur un axe R des roues. De cette manière, le châssis peut pivoter au moins autour de cet axe Z de pivotement et de l'axe R des roues ce qui lui permet d'effectuer un mouvement combiné associant un mouvement de lacet vers la droite ou la gauche du plan médian des roues et un angle positif ou négatif de roulis de la brosse par rapport au sol et ce, sans que les deux mouvements de rotation soient dissociés, c'est-à-dire sans avoir besoin d'effectuer des manipulations supplémentaires par le biais de composants supplémentaires. Il est à noter que le plan médian M, illustré notamment en figures 3 et 7 est le plan dans lequel sont inclus notamment les axes D et Z.

Un tel concept présente l'avantage de fournir un équipement à conducteur marchant à géométrie variable dont la compacité et les coûts sont réduits du fait que la mise en mouvement de la brosse nécessite un nombre moindre de composants mécaniques. En outre, cela permet d'optimiser le temps nécessaire pour bien positionner la brosse rotative en regard du sol, de la zone de travail ou d'obstacles.

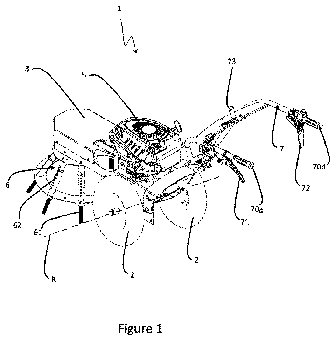

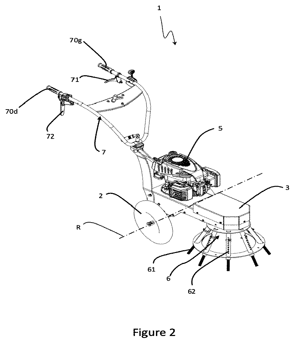

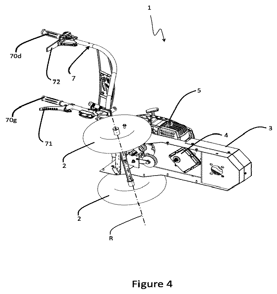

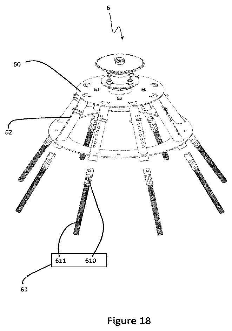

On présente maintenant, en relation avec les figures 1 à 18, un mode de réalisation d'un équipement à conducteur marchant à géométrie variable selon l'invention.

Comme illustré, l'équipement 1 à conducteur marchant est apte à être déplacé selon une direction D de déplacement.

Cet équipement 1 comprend une barre de guidage 7 relié à un châssis 3, et deux roues 2 reliées entre elles par un essieu de roues ménagé selon un axe R de roues. Comme illustré, l'axe de roues R est préférentiellement un axe horizontal.

Cet essieu et ces roues 2 présentent également un plan médian M, positionné à égale distance de chacune de ces roues 2, et orthogonal à cet axe R de roues. Ce plan médian M comprend la direction D de déplacement. Cet essieu porte également un pivot 23, qui est positionné sur le plan médian M des roues 2. Ce pivot 23 est ménagé selon un axe Z de pivotement non perpendiculaire au sol ou au châssis 3. Il est, selon les modes de réalisation, incliné d'un angle compris entre 30 et 60 degrés par rapport à un axe vertical V également compris dans le plan médian M des roues 2.

Dans ce mode de réalisation, le pivot 23 et donc l'axe Z de pivotement sont inclinés d'un angle sensiblement égal à 45 degrés par rapport à la direction verticale V.

Le maintien en position du châssis 3 par rapport aux roues 2, est réalisé, par exemple, par un système de plaque d'indexation 22 à plusieurs trous et d'un doigt d'indexage.

Ce pivot 23 supporte le châssis 3 qui, lui-même, comporte une boîte de vitesse 4, et un moteur 5 entrainant en rotation une brosse rotative 6 par l'intermédiaire de la boite de vitesse 4. Cette brosse rotative 6 est portée par le châssis 3 de sorte à pouvoir entrer en contact avec le sol.

Comme illustré sur les différentes figures, la brosse rotative 6 comprend une structure principale 60 présentant une forme sensiblement conique ou circulaire, et une pluralité de torons 61 répartis dans une pluralité de logements 62 ménagés sur le pourtour du plateau principal 60.

Ici, les logements 62 et donc les torons 61 sont répartis de manière régulière sur le pourtour du plateau principal 60.

On pourrait toutefois prévoir des modes de réalisation dans lesquels les torons ne sont pas répartis de manière régulière sur le pourtour mais simplement répartis en groupes.

Chacun des torons 61 comprenant un manchon 610, relié au logement, et une pluralité de fils 611 maintenus dans le manchon 610 par sertissage. Ces fils circulaires peuvent être composés d'une matière souple et résistante à l'abrasion communément appelée « corde à piano » et leur diamètre, qui peut être compris entre 0.5 et 1.8mm, est adapté pour pouvoir pénétrer dans les interstices du sol sans le dégrader.

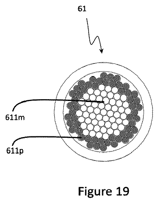

On illustre en figures 19 à 21 trois modes de réalisations de torons selon l'invention.

Pour chacun des torons de la brosse rotative, on peut prévoir que la pluralité de fils 611 comprenne un premier groupe 611m de fils en métal et un deuxième groupe 611p de fils en plastique. De cette manière, cela permet d'avoir une résistance au contact avec le sol qui soit différente et donc un nettoyage différent.

Comme visible en figure 19, on peut par exemple prévoir que le premier groupe 611m de fils en métal est placé au centre du toron 61 et le deuxième groupe 611p de fils en plastique est placé autour du premier groupe de fils en métal 611m.

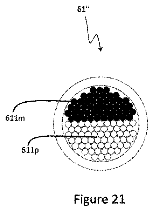

On peut également prévoir, comme visible en figure 21, que le premier groupe 611m de fils en métal soit placé dans une première moitié du toron 61" et le deuxième groupe 611p de fils en plastique soit placé dans une deuxième moitié du toron 61".

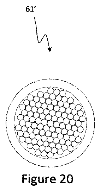

Enfin, on peut également prévoir, comme visible sur le toron 61' représenté en figure 20, que la pluralité de fils soit réalisée en un seul matériau.

Selon l'invention, le châssis 3 est monté pivotant sur le pivot 23, c'est-à-dire autour de l'axe Z de pivotement. De cette manière, le châssis 3 peut pivoter au moins autour de l'essieu des roues qui est orienté selon l'axe R, et autour du pivot 23 qui est orienté selon l'axe Z de pivotement.

En outre, le châssis 3 peut, du fait qu'il est mobile en rotation autour de l'essieu et donc autour de l'axe R des roues, basculer d'avant en arrière ou inversement. De ce fait, le châssis 3 est monté mobile en rotation par rapport à l'axe Z de pivotement et à l'axe R de roues, le châssis 3 pouvant pivoter au moins autour de l'axe R de roues et autour de l'axe Z de pivotement, de sorte à provoquer de façon simultanée un mouvement de lacet et de roulis du châssis 3 par rapport à sa position initiale.

Ainsi, ce châssis 3 est mobile, dans ce cas de figure, par rapport au sol, entre au moins :
- une position axée sur le plan médian M des roues 2, le long de la direction D, position dans laquelle il est maintenu fixe par rapport à l'axe Z de pivotement, par exemple via un doigt d'indexation ou tout autre moyen de verrouillage et
- une position désaxée du plan médian des roues 2 dans laquelle il peut pivoter au moins autour de l'axe R de l'essieu et autour de l'axe Z de pivotement.

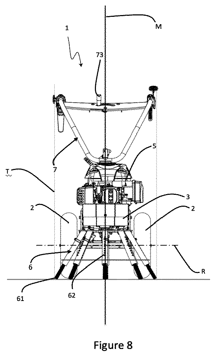

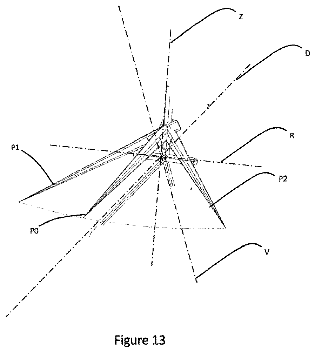

On présente, en figures 7 et 8, l'équipement 1 à conducteur marchant dans lequel le châssis 3 est dans une position axée sur le plan médian M des roues. Cette position correspond à la position P0 illustrée en figure 13. Comme illustré sur ces figures 7 et 8, le châssis 3 et la brosse rotative 6 sont ménagés sensiblement parallèles au sol. Ainsi, dans cette position, un utilisateur peut utiliser l'équipement pour, par exemple, nettoyer le sol devant l'équipement en maximisant la surface de travail de la brosse.

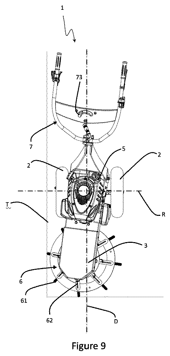

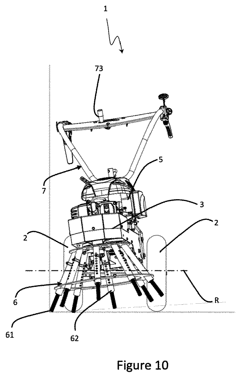

On présente, en figures 9 et 10, l'équipement à conducteur marchant à géométrie variable dans lequel le châssis 3 est dans une position désaxée du plan médian M des roues. Cette position correspond à la position P1 illustrée en figure 13. Comme illustré sur ces figures 9 et 10, le châssis 3 et la brosse rotative 6 sont ménagés sensiblement dans un plan incliné par rapport au sol, la brosse rotative étant décalée vers la droite de l'équipement depuis le point de vue de l'utilisateur. Ainsi, dans cette position, un utilisateur peut utiliser l'équipement pour, par exemple, nettoyer le sol sur le côté droit en focalisant l'effort de la brosse sur une zone donnée et donc maximiser l'efficacité de désherbage.

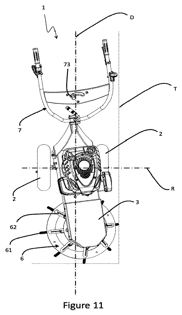

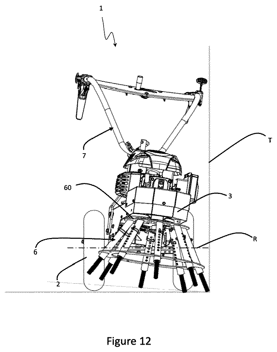

Enfin, les figures 11 et 12 illustrent une position de l'équipement dans laquelle le châssis 3 est dans une position désaxée du plan médian M des roues, le châssis 3 et la brosse rotative 6 étant ménagés sensiblement dans un plan incliné par rapport au sol, la brosse rotative étant décalée vers la gauche de l'équipement. Cette position correspond à la position P2 illustrée en figure 13. Ainsi, dans cette position, un utilisateur peut utiliser l'équipement pour, par exemple, nettoyer le sol sur le côté gauche en focalisant l'effort de la brosse sur une zone donnée et donc maximiser l'efficacité de désherbage.

Ces deux positions désaxées par rapport au plan médian des roues sont particulièrement étudiées pour permettre à l'utilisateur de positionner la brosse dans les pieds de murs, bords de trottoirs ou caniveaux difficilement accessibles avec une brosse qui resterait sensiblement parallèle au sol tout au long du nettoyage.

En outre, ces positions sont étudiées pour que le nettoyage et/ou le désherbage soient effectués en réduisant au maximum les efforts pour l'utilisateur.

L'avantage de pouvoir pivoter selon ces positions par rapport au plan médian peut également permettre, par exemple, d'utiliser cet équipement dans une rue à sens unique et de nettoyer ou désherber les deux côtés toujours en remontant la rue quel que soit le côté sur lequel la machine travaille. Un tel avantage permet d'améliorer la sécurité pour un utilisateur car le fait de nettoyer les deux côtés dans le sens opposé à la circulation permet de rester face aux véhicules arrivant et de voir plus facilement un danger arriver.

Il est à noter que le châssis 3 est également apte à pivoter par rapport à sa position initiale axée sur le plan médian M des roues autour de l'axe Z de pivotement selon un angle qui peut être compris entre -30 degrés et 30 degrés par rapport à la position initiale.

Ici, lorsque le châssis 3 forme un angle compris entre -30 degrés et 0 degrés par rapport à sa position initiale axée sur le plan médian M des roues, la brosse rotative 6 s'incline par rapport au sol dans un sens antihoraire, c'est à dire dans le sens inverse des aiguilles d'une montre.

En revanche, lorsque le châssis 3 forme un angle compris entre 0 degrés et 30 degrés par rapport à sa position initiale axée sur le plan médian des roues, la brosse rotative 6 s'incline par rapport au sol dans un sens horaire, c'est à dire selon le sens des aiguilles d'une montre.

Comme déjà décrit, le maintien en position du châssis 3 par rapport aux roues 2 est réalisé, dans ce mode de réalisation, par un système de plaque d'indexation 22 à plusieurs trous qui peut être accompagné d'un doigt d'indexage.

De sorte à contrôler le basculement du châssis 3, l'équipement 1 à conducteur marchant comprend des moyens 71 de déverrouillage de la rotation de ce châssis 3.

Ces moyens 71 de déverrouillage se présentent, dans ce mode de réalisation, sous la forme d'un premier levier de commande disposé au niveau d'une première poignée 70g de la barre de guidage 7 de l'équipement 1. Plus particulièrement, ici, ces moyens de déverrouillage sont disposés au niveau de la poignée gauche 70g de la barre de guidage 7 de l'équipement.

On peut noter que la barre de guidage comprend en outre une poignée droite 70d comprenant également une manette 72. Cette manette 72 permet de tendre la courroie qui transmet la rotation du moteur à la boite de vitesse.

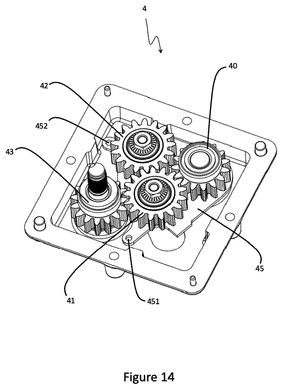

Un autre aspect de l'invention, présenté en relation avec les figures 14 à 17, concerne le fait que l'équipement est équipé de moyens d'inversion du sens de rotation de la brosse rotative, que ce soit pour effectuer une marche arrière ou inverser directement la rotation, par exemple pour un deuxième passage sur une surface.

Pour ce faire, et comme illustré sur ces figures 14 à 17, la boite de vitesse 4 présente :
- un pignon d'entrée 40 relié à l'arbre menant du moteur 3,
- un pignon de sortie 43 qui relié à un arbre de sortie entraînant en rotation la brosse rotative 6,
- un train de pignons intermédiaires comprenant un premier pignon intermédiaire 41 reliant le pignon d'entrée 40 au pignon de sortie 43, et un deuxième pignon intermédiaire 42.

Ce train de pignons intermédiaires composé du premier pignon intermédiaire 41 et du deuxième pignon intermédiaire 42 est mobile entre au moins :
- une position de fonctionnement normal dans laquelle le deuxième pignon intermédiaire 42 est uniquement au contact du premier pignon intermédiaire 41, le pignon de sortie 43 étant en contact avec le premier pignon intermédiaire 41 et tournant dans le même sens que le pignon d'entrée 40 ;
- une position d'inversion dans laquelle le premier pignon intermédiaire est à distance dudit pignon de sortie, le deuxième pignon intermédiaire 42 est au contact du premier pignon intermédiaire 41 et du pignon de sortie 43, le pignon de sortie 43 tournant dans le sens inverse du pignon d'entrée 40.

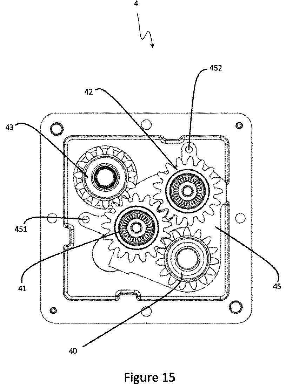

Les figures 14 et 15 illustrent la boîte de vitesse avec le train de pignons intermédiaires dans une position de fonctionnement normal. Comme visible sur ces figures, le deuxième pignon intermédiaire 42 est uniquement au contact du premier pignon intermédiaire 41 mais n'est pas au contact des pignons d'entrée 40 et de sortie 43. La transmission du mouvement en rotation entre le moteur 5 et la brosse 6 se fait donc du pignon d'entrée 40 vers le pignon de sortie 43 en passant par le premier pignon intermédiaire 41. Dans ce cas de figure, le pignon de sortie 43 tourne dans le même sens que le pignon d'entrée 40.

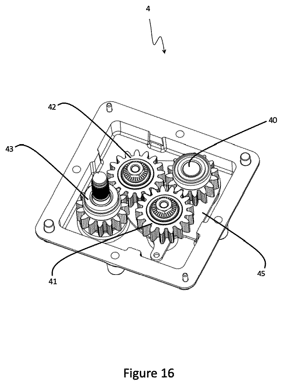

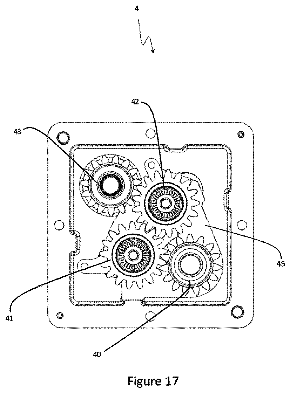

Les figures 16 et 17 illustrent la boîte de vitesse avec le train de pignons intermédiaires dans une position d'inversion.

Comme visible sur ces figures, le deuxième pignon intermédiaire 42 est, dans cette position, au contact à la fois du premier pignon intermédiaire 41 et du pignon de sortie 43. Le premier pignon intermédiaire 41 n'est plus en contact avec le pignon de sortie 43. La transmission du mouvement en rotation entre le moteur 5 et la brosse 6 se fait donc du pignon d'entrée 40 vers le pignon de sortie 43 en passant par le premier pignon intermédiaire 41 et le deuxième pignon intermédiaire 42. Dans ce cas de figure, le pignon de sortie 43 tourne dans le sens inverse du pignon d'entrée 40.

Comme illustré sur ces figures, le passage de la position de fonctionnement normal à la position d'inversion du train de pignons intermédiaires se fait par pivotement de ce train de pignons intermédiaires autour d'un axe de rotation du pignon d'entrée 40 correspondant à l'axe de rotation de l'arbre menant.

Plus particulièrement, ce pivotement est possible par une platine de support 45 montée pivotante autour de cet axe de rotation du pignon d'entrée et sur laquelle sont placés les premier 41 et deuxième 42 pignons intermédiaires.

Il est à noter que, pour amplifier la solidité mécanique de cette transmission, et selon un mode de réalisation, il est également possible de mettre également une platine de support symétriquement à l'autre platine de support, de l'autre côté des pignons. De cette manière, dans ce mode de réalisation, les pignons sont « en sandwich » entre les deux platines de support.

Ainsi, lors du passage de la position de fonctionnement normal à la position d'inversion, la platine de support pivote autour de l'axe de rotation du pignon d'entrée de sorte que le train de pignons intermédiaires passe d'une position dans laquelle le deuxième pignon intermédiaire n'est pas au contact du pignon de sortie à une position dans laquelle il est au contact du pignon de sortie.

De sorte à faciliter la manipulation de la platine de support 45 par un utilisateur, celle-ci est manoeuvrable par le biais d'un deuxième levier 73 de commande qui est disposé au centre de la barre de guidage 7 de l'équipement 1 de sorte à faire passer le deuxième pignon intermédiaire 42 de la position libre à la position d'inversion, la platine de support 45 étant reliée au levier 73 de commande au moyen d'un ou de deux câbles de commande selon le mode de réalisation.

La platine de support 45 est ici reliée au deuxième levier 73 de commande au moyen du câble de commande relié à un premier moyen d'accroche 451 de la platine de support 45.

Selon le mode de réalisation illustré, il est prévu que la platine de support 45 présente un ressort de rappel du deuxième pignon intermédiaire 42 en position libre.

De cette manière, cela permet que la position en fonctionnement normal soit la position « par défaut » du pignon intermédiaire.

Selon un mode de réalisation alternatif, la platine de support 45 peut être équipée d'un deuxième câble opposé au premier et relié au levier 73 à l'opposé de l'accroche du premier câble, et relié à la platine de support 45 par le biais d'un deuxième moyen d'accroche 452.

Selon ce mode de réalisation le système possède deux positions franches tirées par deux câbles distincts et fonctionnant de façon opposée et complémentaire afin de limiter le jeu d'usure qui pourrait arriver dans le temps.

Ainsi, le principe général de l'invention présente l'avantage de fournir un équipement à conducteur marchant à géométrie variable dont la compacité et les coûts sont réduits du fait que la mise en mouvement de la brosse nécessite un nombre moindre de composants mécaniques. En outre, cela permet d'optimiser le temps nécessaire pour bien positionner la brosse rotative en regard du sol, de la zone de travail ou d'obstacles.

En combinaison avec le système d'inversion mécanique de sens de rotation de la brosse, cette brosse peut, selon la position du châssis et le sens de rotation de la brosse, permettre soit la traction de l'ensemble de la machine dans le sens de déplacement D par l'effort résultant de l'action de la brosse sur le sol soit permettre une action plus abrasive en tournant dans le sens opposé du sens de déplacement D sur une zone définie.

Il est à noter qu'en fonction du sens dans lequel on souhaite déplacer l'équipement et en fonction du sens dans lequel la brosse tourne, l'effort résultant peut permettre de faire avancer la machine. Une telle caractéristique permet notamment de limiter les efforts à fournir.

En d'autres termes, dans ce mode de réalisation la brosse peut entrainer la machine en avant ou en arrière selon la position du châssis par rapport au plan médian des roues et selon le sens de rotation de la brosse :
- si l'on souhaite déplacer l'équipement vers l'avant et que la brosse tourne dans un sens antihoraire, l'effort résultant de la brosse facilite ce mouvement ;
- si l'on souhaite déplacer l'équipement vers l'arrière et que la brosse tourne dans un sens horaire, l'effort résultant de la brosse facilite ce mouvement.

## Revendications

1. Équipement (1) à conducteur marchant à géométrie variable, apte à être déplacé selon une direction (D) de déplacement, ledit équipement (1) comprenant deux roues (2) portées par un essieu ménagé selon un axe (R) de roues, lesdites deux roues (2) présentant un plan médian (M) situé sensiblement à égale distance de chacune desdites roues (2), ledit plan médian (M) étant orthogonal audit axe (R) de roues et portant la direction (D), ledit essieu comportant un pivot (23) monté selon un axe (Z) de pivotement porté par ledit plan médian (M), ledit axe (Z) de pivotement étant non perpendiculaire au sol et supportant un châssis (3),
ledit équipement (1) comprenant une boîte de vitesse (4), un moteur (5) entrainant en rotation une brosse rotative (6) pour le désherbage et/ou le nettoyage des sols par l'intermédiaire de ladite boite de vitesse (4), ledit châssis (3) supportant ladite boîte de vitesse (4) et ledit moteur (5), ladite brosse rotative (6) étant portée par ledit châssis (3) de sorte à pouvoir entrer en contact avec le sol, et une barre de guidage (7) dudit équipement,
ledit châssis (3) portant ladite brosse rotative (6) est monté mobile en rotation par rapport audit axe (Z) de pivotement et audit axe (R) de roues, le châssis (3) pouvant pivoter au moins autour de l'axe (R) de roues et autour dudit axe (Z) de pivotement, de sorte à provoquer de façon simultanée un mouvement de lacet et de roulis dudit châssis (3)_et de ladite brosse rotative (6).

2. Équipement (1) à conducteur marchant à géométrie variable selon la revendication 1, **caractérisé en ce que** ledit châssis (3) est mobile entre au moins :
- une position initiale axée sur ledit plan médian (M), dans laquelle il est maintenu fixe par rapport audit axe (Z) de pivotement, et
- une position désaxée dans laquelle ledit châssis peut pivoter au moins autour de l'axe (R) de roues et autour de l'axe (Z) de pivotement,
et **en ce que** l'équipement à conducteur marchant à géométrie variable comprend des moyens (71) de déverrouillage de la position dudit châssis (3).

3. Équipement (1) à conducteur marchant à géométrie variable selon la revendication 2, **caractérisé en ce que** lesdits moyens (71) de déverrouillage se présentent sous la forme d'un premier levier de commande disposé au niveau d'une première poignée (70g) de la barre de guidage (7) dudit équipement (1).

4. Équipement (1) à conducteur marchant à géométrie variable selon l'une des revendications 2 ou 3, **caractérisé en ce que** ledit châssis (3) est apte à pivoter par rapport à sa position initiale verrouillée autour de l'axe (Z) selon un angle compris entre -30 degrés et 30 degrés.

5. Équipement (1) à conducteur marchant à géométrie variable selon la revendication précédente, configuré pour qu'un pivotement dudit châssis (3) selon un angle compris entre -30 degrés et 0 degrés par rapport à sa position initiale verrouillée entraine une inclinaison de la brosse rotative (6) par rapport au sol dans un sens antihoraire.

6. Équipement (1) à conducteur marchant à géométrie variable selon la revendication 4, configuré pour qu'un pivotement dudit châssis (3) selon un angle compris entre 0 degrés et 30 degrés par rapport à sa position initiale verrouillée entraine une inclinaison de la brosse rotative (6) par rapport au sol dans un sens horaire.

7. Équipement (1) à conducteur marchant à géométrie variable selon l'une des revendications précédentes, **caractérisé en ce que** ladite boite de vitesse (4) présente :
- un pignon d'entrée (40) relié à l'arbre menant du moteur (3) ;
- un pignon de sortie (43) relié à un arbre de sortie entrainant en rotation ladite brosse rotative (6), et
- un train de pignons intermédiaires comprenant un premier pignon intermédiaire (41) et un deuxième pignon intermédiaire (42), ledit premier pignon intermédiaire étant lié avec ledit pignon d'entrée (40),
ledit train de pignons intermédiaires étant mobile entre au moins :
- une position de fonctionnement normal dans laquelle ledit deuxième pignon intermédiaire (42) est uniquement au contact dudit premier pignon intermédiaire (41), le pignon de sortie (43) étant en contact avec ledit premier pignon intermédiaire (41) et tournant dans le même sens que le pignon d'entrée (40), et
- une position d'inversion dans laquelle ledit premier pignon intermédiaire (41) est à distance dudit pignon de sortie (43), et ledit deuxième pignon intermédiaire (42) est au contact desdits premier pignon intermédiaire (41) et pignon de sortie (43), ledit pignon de sortie (43) tournant dans le sens inverse du pignon d'entrée (40).

8. Équipement (1) à conducteur marchant à géométrie variable selon la revendication précédente, le passage de ladite position de fonctionnement normal à ladite position d'inversion se fait par pivotement dudit train de pignons intermédiaires autour d'un axe de rotation dudit pignon d'entrée (40).

9. Équipement (1) à conducteur marchant à géométrie variable selon la revendication précédente, lesdits premier (41) et deuxième (42) pignons intermédiaires étant ménagés sur une platine de support (45) montée pivotante autour dudit axe de rotation dudit pignon d'entrée (40).

10. Équipement (1) à conducteur marchant à géométrie variable selon la revendication précédente, **caractérisé en ce que** ladite platine de support (45) est manoeuvrable par le biais d'un deuxième levier (73) de commande disposé au niveau de la barre de guidage dudit équipement (1) de sorte à faire passer ledit train de pignons intermédiaires de ladite position de fonctionnement normal à ladite position d'inversion, ladite platine de support (45) étant reliée audit deuxième levier (73) de commande au moyen d'un câble de commande relié à un premier moyen d'accroche (451) de ladite platine de support (45).

11. Équipement (1) à conducteur marchant à géométrie variable selon l'une des revendications 9 ou 10, **caractérisé en ce que** ladite platine de support (45) présente un ressort de rappel dudit train de pignons intermédiaires en position de fonctionnement normal.

12. Équipement (1) à conducteur marchant à géométrie variable selon l'une des revendications 9 ou 10, **caractérisé en ce que** ladite platine de support (45) présente un deuxième moyen d'accroche (452) pour un deuxième câble de commande fonctionnant en opposition au premier câble de commande et permettant de verrouiller l'une ou l'autre des positions du train de pignons intermédiaires.

13. Équipement (1) à conducteur marchant à géométrie variable selon l'une des revendications précédentes, caractérisé en ce ladite brosse rotative (6) comprend un plateau principal (60) présentant une forme sensiblement circulaire, et une pluralité de torons (61) répartis dans une pluralité de logements (62) ménagés sur le pourtour dudit plateau principal (60), chacun des torons (61) comprenant un manchon (610) et une pluralité de fils (611) maintenus dans ledit manchon (610) par sertissage.

14. Équipement (1) à conducteur marchant à géométrie variable selon la revendication précédente, **caractérisé en ce que**, pour chacun des torons, ladite pluralité de fils (611) comprend un premier groupe (611m) de fils en métal et un deuxième groupe (611p) de fils en plastique.

## Patentansprüche

1. Handgeführtes Gerät (1) mit einer variablen Geometrie, das geeignet ist, in einer Verschiebungsrichtung (D) verschoben zu werden, wobei das Gerät (1) zwei Räder (2) aufweist, die von einer Achse getragen sind, die nach einer Radachse (R) angeordnet sind, wobei die zwei Räder (2) eine Mittelebene (M) aufweisen, die sich im Wesentlichen in gleichem Abstand von jedem der Räder (2) befindet, wobei die Mittelebene (M) orthogonal zu der Radachse (R) ist und die Richtung (D) trägt, wobei die Achse einen Drehzapfen (23) aufweist, der entlang einer Schwenkachse (Z) befestigt ist, die von der Mittelebene (M) getragen ist, wobei die Schwenkachse (Z) nicht senkrecht zum Boden ist und ein Gestell (3) trägt,
wobei das Gerät (1) ein Getriebe (4), einen Motor (5), der eine rotierende Bürste (6) zur Unkrautentfernung und/oder zum Reinigen der Böden über das Getriebe (4) in Drehung versetzt, wobei das Gestell (3) das Getriebe (4) und den Motor (5) trägt, wobei die rotierende Bürste (6) von dem Gestell (3) derart getragen wird, um mit dem Boden in Kontakt zu kommen, und eine Führungsstange (7) des Geräts aufweist,
das Gestell (3), das die rotierende Bürste (6) trägt, ist in Bezug auf die Schwenkachse (Z) und die Radachse (R) drehbeweglich gelagert, wobei das Gestell (3) mindestens um die Radachse (R) und um die Schwenkachse (Z) derart schwenkbar ist, um gleichzeitig eine Gier- und Rollbewegung des Gestells (3) und der rotierenden Bürste (6) zu bewirken.

2. Handgeführtes Gerät (1) mit einer variablen Geometrie nach Anspruch 1,
**dadurch gekennzeichnet, dass** das Gestell (3) beweglich ist zwischen mindestens:
- einer Ausgangsposition, die auf die Mittelebene (M) ausgerichtet ist, in der es relativ zur Schwenkachse (Z) festgehalten wird, und
- einer versetzten Position, in der das Gestell mindestens um die Radachse (R) und um die Schwenkachse (Z) schwenkbar ist,
**dadurch gekennzeichnet, dass** das handgeführte Gerät mit einer variablen Geometrie Entriegelungsmittel (71) der Position des Gestells (3) aufweist.

3. Handgeführtes Gerät (1) mit einer variablen Geometrie nach Anspruch 2, **dadurch gekennzeichnet, dass** die Entriegelungsmittel (71) die Form eines ersten Steuerhebels aufweisen, der an einem ersten Griff (70g) der Führungsstange (7) des Geräts (1) angeordnet ist.

4. Handgeführtes Gerät (1) mit einer variablen Geometrie nach einem der Ansprüche 2 oder 3, **dadurch gekennzeichnet, dass** das Gestell (3) in Bezug auf seine verriegelte Ausgangsposition in einem Winkel zwischen -30 Grad und 30 Grad um die Achse (Z) schwenkbar ist.

5. Handgeführtes Gerät (1) mit einer variablen Geometrie nach dem vorhergehenden Anspruch, das ausgelegt ist, damit ein Schwenken des Gestells (3) in Bezug auf seine verriegelte Ausgangsposition in einem Winkel zwischen -30 Grad und 0 Grad eine Neigung der rotierenden Bürste (6) relativ zum Boden gegen den Uhrzeigersinn bewirkt.

6. Handgeführtes Gerät (1) mit einer variablen Geometrie nach Anspruch 4, das ausgelegt ist, damit ein Schwenken des Gestells (3) in Bezug auf seine verriegelte Ausgangsposition in einem Winkel zwischen 0 Grad und 30 Grad eine Neigung der rotierenden Bürste (6) relativ zum Boden im Uhrzeigersinn bewirkt.

7. Handgeführtes Gerät (1) mit einer variablen Geometrie nach einem der vorhergehenden Ansprüche, **dadurch gekennzeichnet, dass** das Getriebe (4) aufweist:
- ein Eingangsritzel (40), das mit der Antriebswelle des Motors (3) verbunden ist,
- ein Ausgangsritzel (43), das mit einer Ausgangswelle verbunden ist, die die rotierende Bürste (6) in Drehung versetzt, und
- einen Satz Zwischenritzel, der ein erstes Zwischenritzel (41) und ein zweites Zwischenritzel (42) aufweist, wobei das erste Zwischenritzel mit dem Eingangsritzel (40) verbunden ist,
wobei der Satz Zwischenritzel beweglich ist zwischen mindestens:
- einer normalen Betriebsposition, in der das zweite Zwischenritzel (42) nur in Kontakt mit dem ersten Zwischenritzel (41) ist, wobei das Ausgangsritzel (43) in Kontakt mit dem ersten Zwischenritzel (41) ist und sich in der gleichen Richtung dreht, wie das Eingangsritzel (40), und
- einer Umkehrposition, in der das erste Zwischenritzel (41) von dem Ausgangsritzel (43) beabstandet ist und das zweite Zwischenritzel (42) in Kontakt mit dem ersten Zwischenritzel (41) und dem Ausgangsritzel (43) ist, wobei sich das Ausgangsritzel (43) in der entgegengesetzten Richtung zum Eingangsritzel (40) dreht.

8. Handgeführtes Gerät (1) mit einer variablen Geometrie nach dem vorhergehenden Anspruch, der Übergang von der normalen Betriebsposition in die Umkehrposition erfolgt durch Schwenken des Satzes Zwischenritzel um eine Drehachse des Eingangsritzels (40).

9. Handgeführtes Gerät (1) mit einer variablen Geometrie nach dem vorhergehenden Anspruch, wobei das erste Zwischenritzel (41) und das zweite (42) Zwischenritzel auf einer Trägerplatte (45) angeordnet sind, die schwenkbar um die Drehachse des Eingangsritzels (40) befestigt ist.

10. Handgeführtes Gerät (1) mit einer variablen Geometrie nach dem vorhergehenden Anspruch, **dadurch gekennzeichnet, dass** die Trägerplatte (45) über einen zweiten Steuerhebel (73) betätigbar ist, der auf der Höhe der Führungsstange des Geräts (1) derart angeordnet ist, um den Satz Zwischenritzel von der normalen Betriebsposition in die Umkehrposition übergehen zu lassen, wobei die Trägerplatte (45) mit dem zweiten Steuerhebel (73) mittels eines Steuerkabels verbunden ist, das mit einem ersten Einhängemittel (451) der Trägerplatte (45) verbunden ist.

11. Handgeführtes Gerät (1) mit einer variablen Geometrie nach nach einem der Ansprüche 9 oder 10, **dadurch gekennzeichnet, dass** die Trägerplatte (45) eine Rückstellfeder des Satzes Zwischenritzel in die normale Betriebsposition aufweist.

12. Handgeführtes Gerät (1) mit einer variablen Geometrie nach einem der Ansprüche 9 oder 10, **dadurch gekennzeichnet, dass** die Trägerplatte (45) ein zweites Einhängemittel (452) für ein zweites Steuerkabel aufweist, das entgegengesetzt zum ersten Steuerkabel arbeitet und ermöglicht, die eine oder andere Position des Satzes Zwischenritzel zu verriegeln.

13. Handgeführtes Gerät (1) mit einer variablen Geometrie nach einem der vorhergehenden Ansprüche, **dadurch gekennzeichnet**, die rotierende Bürste (6) eine Hauptplatte (60) mit einer im Wesentlichen kreisförmigen Form und mehrere Litzen (61) aufweist, die in mehreren Aufnahmen (62) verteilt sind, die auf dem Umfang der Hauptplatte ausgebildet sind, wobei jede der Litzen (61) eine Hülse (610) und mehrere Drähte (611) aufweist, die durch Crimpen in der Hülse (610) gehalten werden.

14. Handgeführtes Gerät (1) mit einer variablen Geometrie nach dem vorhergehenden Anspruch, **dadurch gekennzeichnet, dass** die mehreren Drähte (611) für jede der Litzen eine erste Gruppe (611m) von Drähten aus Metall und eine zweite Gruppe (611p) von Drähten aus Kunststoff aufweist.

## Claims

1. Variable-geometry walk-behind equipment (1) able to be moved in a movement direction (D), said equipment (1) comprising two wheels (2) carried by an axle provided on a wheel axis (R), said two wheels (2) having a midplane (M) located substantially at equal distances from each of said wheels (2), said midplane (M) being orthogonal to said wheel axis (R) and carrying the direction (D), said axle including a pivot (23) mounted on a pivot axis (Z) carried by said midplane (M), said pivot axis (Z) being non-perpendicular to the ground and supporting a chassis (3),
said equipment (1) comprising a gearbox (4), an engine (5) rotating a rotary brush (6) for weeding and/or cleaning the ground through said gearbox (4), said chassis (3) supporting said gearbox (4) and said engine (5), said rotary brush (6) being carried by said chassis (3) so as to be able to come into contact with the ground, and a guide bar (7) of said equipment,
said chassis (3) carrying said rotary brush (6) is mounted so as to be able to rotate with respect to said pivot axis (Z) and said wheel axis (R), the chassis (3) being able to pivot at least about the wheel axis (R) and about said pivot axis (Z), so as to simultaneously cause a yaw and roll movement of said chassis (3) and of said rotary brush (6).

2. Variable-geometry walk-behind equipment (1) according to claim 1, **characterised in that** said chassis (3) is able to move between at least:
- an initial position aligned on said midplane (M), wherein it is held fixed with respect to said pivot axis (Z), and
- an off-centred position wherein said chassis can pivot at least about the wheel axis (R) and about the pivot axis (Z),
and **in that** the variable-geometry walk-behind equipment comprises means (71) for unlocking the position of said chassis (3).

3. Variable-geometry walk-behind equipment (1) according to claim 2, **characterised in that** said unlocking means (71) are in the form of a first control lever disposed at a first handle (70g) of the guide bar (7) of said equipment (1).

4. Variable-geometry walk-behind equipment (1) according to one of claims 2 or 3, **characterised in that** said chassis (3) is able to pivot with respect to its locked initial position about the axis (Z) by an angle of between -30 degrees and 30 degrees.

5. Variable-geometry walk-behind equipment (1) according to the preceding claim, configured so that a pivoting of said chassis (3) by an angle of between -30 degrees and 0 degrees with respect to its locked initial position causes an inclination of the rotary brush (6) with respect to the ground in an anticlockwise direction.

6. Variable-geometry walk-behind equipment (1) according to claim 4, configured so that a pivoting of said chassis (3) by an angle of between 0 degrees and 30 degrees with respect to its locked initial position causes an inclination of the rotary brush (6) with respect to the ground in a clockwise direction.

7. Variable-geometry walk-behind equipment (1) according to one of the preceding claims, **characterised in that** said gearbox (4) has:
- an input gear wheel (40) connected to the driving shaft of the engine (3);
- an output gear wheel (43) connected to an output shaft rotating said rotary brush (6), and
- a train of intermediate gear wheels comprising a first intermediate gear wheel (41) and a second intermediate gear wheel (42), said first intermediate gear wheel being connected with said input gear wheel (40),
said train of intermediate gear wheels being able to move between at least:
- a normal operating position wherein said second intermediate gear wheel (42) is solely in contact with said first intermediate gear wheel (41), the output gear wheel (43) being in contact with said first intermediate gear wheel (41) and rotating in the same direction as the input gear wheel (40), and
- a reversal position wherein said first intermediate gear wheel (41) is at a distance from said output gear wheel (43), and said second intermediate gear wheel (42) is in contact with said first intermediate gear wheel (41) and output gear wheel (43), said output gear wheel (43) rotating in the opposite direction to said input gear wheel (40).

8. Variable-geometry walk-behind equipment (1) according to the preceding claim, the passage from said normal operating position to said reversal position is done by pivoting of said train of intermediate gear wheels about a rotation axis of said input pinion (40).

9. Variable-geometry walk-behind equipment (1) according to the preceding claim, said first (41) and second (42) intermediate gear wheels being provided on a support plate (45) mounted so as to pivot about said rotation axis of said input gear wheel (40).

10. Variable-geometry walk-behind equipment (1) according to the preceding claim, **characterised in that** said support plate (45) can be manoeuvred by means of a second control lever (73) disposed at the guide bar of said equipment (1) so as to cause said train of intermediate gear wheels to pass from said normal operating position to said reversal position, said support plate (45) being connected to said second control lever (73) by means of a control cable connected to a first attachment means (451) of said support plate (45).

11. Variable-geometry walk-behind equipment (1) according to one of claims 9 or 10, **characterised in that** said support plate (45) has a spring for returning said train of intermediate gear wheels into the normal operating position.

12. Variable-geometry walk-behind equipment (1) according to one of claims 9 or 10, **characterised in that** said support plate (45) has a second attachment means (452) for a second control cable operating in opposition to the first control cable and making it possible to lock one or other of the positions of the train of intermediate gear wheels.

13. Variable-geometry walk-behind equipment (1) according to one of the preceding claims, **characterised in that** said rotary brush (6) comprises a main platen (60) having a substantially circular shape, and a plurality of strands (61) distributed in a plurality of housings (62) provided on the circumference of said main platen (60), each of the strands (61) comprising a sleeve (610) and a plurality of fibres (611) held in said sleeve (610) by crimping.

14. Variable-geometry walk-behind equipment (1) according to the preceding claim, **characterised in that**, for each of the strands, said plurality of fibres (611) comprises a first group (611m) of metal fibres and a second group (611p) of plastic fibres.
